# EUROPÄISCHE PATENTSCHRIFT

(11) **EP 1 707 295 B1**
(45) Veröffentlichungstag und Bekanntmachung des Hinweises auf die Patenterteilung: **09.01.2019**
(21) Anmeldenummer: 06111528.3
(22) Anmeldetag: 22.03.2006
(51) Int. Cl.: B23K 9/167, B23K 35/38

(54) **Schutzgas zum WIG-Schweißen von Metallen**
Shielding gas for TIG-welding of metals
Gaz de protection pour le soudage TIG de métaux

(30) Priorität: 31.03.2005 DE 102005014615
(43) Veröffentlichungstag der Anmeldung: 04.10.2006
(73) Patentinhaber: Messer Group GmbH, 65812 Bad Soden (DE)
(72) Erfinder: Hildebrandt, Bernd, 47918 Tönisvorst (DE); Wankum, Achim, 47809 Krefeld (DE)
(74) Vertreter: Münzel, Joachim R.

(56) Entgegenhaltungen:
- EP-A- 1 295 669
- WO-A-99/22901
- WO-A-02/076670
- DE-A1- 10 254 742
- DE-A1- 10 254 743
- PATENT ABSTRACTS OF JAPAN Bd. 006, Nr. 106 (M-213), 10. Mai 1983 (1983-05-10) & JP 58 029581 A (TEISAN KK), 21. Februar 1983 (1983-02-21)
- PATENT ABSTRACTS OF JAPAN Bd. 005, Nr. 131 (M-084), 21. August 1981 (1981-08-21) & JP 56 066382 A (DAIDO STEEL CO LTD), 4. Juni 1981 (1981-06-04)
- HUNT C ET AL: "HELIUM - A LIGHTWEIGHT GAS BUT A HEAVYWEIGHT PERFORMER" WELDING AND METAL FABRICATION, IPC LTD. HAYWARDS HEATH, GB, Bd. 65, Nr. 6, Juni 1997 (1997-06), Seite 10,12,14, XP000659973 ISSN: 0043-2245

## Beschreibung

Die Erfindung betrifft ein Schutzgas zum WIG-Schweißen von Metallen, insbesondere zum Schweißen von hochlegierten Stählen.

In der industriellen Anwendung sind zahlreichen Schweißgase für das Schweißen unter Schutzgasen bekannt, wobei je nach der Zusammensetzung des zu schweißenden Werkstücks und der jeweiligen Schweißaufgabe unterschiedliche Schweißgase zum Einsatz kommen. Unter dem Wolfram - Inertgas - LichtbogenSchweißen (WIG) wird im Allgemeinen ein Schweißverfahren mit einer nichtabschmelzenden oder nichtabbrennenden Elektrode (Dauerelektrode) verstanden, die im Allgemeinen aus Wolfram besteht. Im Kontext der vorliegenden Erfindung wird unter einem WIG-Schweißverfahren jedes Schweißverfahren verstanden, bei denen eine nichtabschmelzende Elektrode zum Einsatz kommt. Üblicherweise brennt dabei der Lichtbogen frei zwischen der Elektrode und dem Werkstück.

Es ist bekannt, dass das WIG-Schweißen von Metallen mit einer Wärmeleitfähigkeit unterhalb von Aluminium, insbesondere hochlegierte Stähle, mit Argon als Schutzgas erfolgt. Um die Schweißleistungen zu verbessern, wurden dem Argon häufig auch andere Gase, insbesondere 2 bis 7,5 % Wasserstoff beigemischt. Die Schweißergebnisse mit solchen Schutzgasen sind je nach Werkstoffzusammensetzung und Schweißzusatzwerkstoff sehr unterschiedlich.

Aus der PCT/EP98/06746 (Veröffentlichungsnummer WO 99/22901) ist ein Dreistoffgemisch zum WIG-Schweißen bekannt, bestehend aus einer Argon mit Beimischungen aus 0,15 bis 1,5 Vol.-% Wasserstoff und 0,5 bis 9 Vol.-% Helium. Mit diesem Gemisch wurde die Lichtbogenstäbilität, die Schweißgeschwindigkeit, die Oxidation der Nahtoberfläche und des nahtnahen Bereiches, das Anfließverhalten und das Nahtaussehen wesentlich verbessert. Dennoch bedarf die Schweißnaht einer erheblichen Nachbearbeitung. Insbesondere ist der Beizaufwand erheblich und die Einbrandqualität verbesserungswürdig.
Aus der DE 102 54 742 A1 ist ein Vierstoffgemisch zum WIG-Schweißen von hoch- oder niedriglegierten Stählen bekannt, bestehend aus 0,1-2,5 Vol.% Wasserstoff, 0,5-4,0 Vol.% Helium und bis zu 0,0590 Vol.% Stickstoff, Rest Argon.

Der Erfindung liegt die Aufgabe zugrunde, eine Verwendung für ein Schutzgas zu schaffen, mit dem eine Verbesserung der Schweißnahtqualität beim WIG - Schweißen erreicht und die erforderliche Nachbearbeitung der Schweißnaht reduziert werden kann.

Diese Aufgabe wird durch die Verwendung eines Schweißgases mit den Merkmalen des Anspruchs 1 gelöst.

Der Wasserstoffanteil des erfindungsgemäß verwendeten Schutzgases liegt zwischen 1,5 Vol-% und 2 Vol-%. Der Wasserstoffgehalt des Schutzgases verbessert die thermische Leitfähigkeit und übt zugleich eine reduzierende Wirkung auf die Werkstoffoberfläche aus. Versuche haben gezeigt, dass ab einem Wasserstoffanteil von 1,5 Vol-% diese Eigenschaften zu besonders vorteilhaften Schweißergebnissen führen. Ein Wasserstoffanteil unter 1,5 Vol-% ist dagegen in vielen Fällen nachteilig für das Schweißergebnis. Andererseits sollte der Wasserstoffanteil einen Wert von 2 Vol-% nicht übersteigen, da der Wasserstoffanteil des Schutzgases auch einen wesentlichen Einfluss auf die Viskosität der Schmelze hat und ein Wert oberhalb von etwa 2 Vol-% zu einer in vielen Fällen ungünstig geringen Viskosität der Schmelze führt.

Der Heliumanteil des erfindungsgemäß verwendeten Schweißgases liegt zwischen 2 Vol-% und 5 Vol-%. Ein Heliumanteil von mehr als 2 Vol-% verbessert die thermische Leitfähigkeit wesentlich. Zugleich gewährleistet der niedrige Heliumanteil eine gute Sichtbarkeit des Lichtbogens. Die Zugabe weiterer Komponenten, wie beispielsweise Stickstoff, erweist sich für die meisten Anwendungen als nachteilig.

Mit dem erfindungsgemäß verwendeten Schutzgasgemisch werden sowohl beim manuellen als auch mechanisierten Schweißen wesentliche anwendungstechnische Vorteile erzielt. Das Fließverhalten wird verbessert, die Tendenz zu Nahtfehlern wird reduziert. Das Einbrandverhalten wird bei gleichem Strom deutlich verbessert und der Beizaufwand deutlich vermindert. Das Ergebnis beim Schweißen insbesondere von hochlegierten Stählen wird wesentlich verbessert.

## Patentansprüche

1. Verwendung eines Schutzgases bestehend aus einem Anteil von 1,5 bis 2 Vol.-% Wasserstoff, 2 bis 5 Vol.-% Helium und Rest Argon zum manuellen WIG-Schweißen von Metallen, insbesondere zum Schweißen von hochlegierten Stählen.

## Claims

1. Use of a shielding gas consisting of a fraction of 1.5 to 2% by volume hydrogen, 2 to 5% by volume helium and for the remainder argon for the manual TIG welding of metals, in particular for the welding of high-alloy steels.

## Revendications

1. Utilisation d'un gaz de protection constitué d'une proportion de 1,5 à 2 % en volume d'hydrogène, 2 à 5 % en volume d'hélium, le reste étant de l'argon, pour un soudage manuel TIG de métaux, en particulier pour le soudage d'aciers hautement alliés.
